# EUROPÄISCHE PATENTSCHRIFT

(11) **EP 2 097 185 B1**
(45) Veröffentlichungstag und Bekanntmachung des Hinweises auf die Patenterteilung: **18.08.2010**
(21) Anmeldenummer: 07802076.5
(22) Anmeldetag: 03.09.2007
(51) Int. Cl.: B21B 38/06, G01B 5/28, G01L 5/04

(54) **VORRICHTUNG ZUR MESSUNG DES BANDZUGES IN EINEM METALLISCHEN BAND**
DEVICE FOR MEASURING THE TENSION IN A METALLIC STRIP
DISPOSITIF DE MESURE DE LA TRACTION DANS UN FEUILLARD METALLIQUE

(30) Priorität: 21.10.2006 DE 102006049744; 15.12.2006 DE 102006059244
(43) Veröffentlichungstag der Anmeldung: 09.09.2009
(73) Patentinhaber: SMS Siemag AG, 40237 Düsseldorf (DE)
(72) Erfinder: KIPPING, Matthias, 57562 Herdorf (DE); TUSCHHOFF, Matthias, 57072 Siegen (DE); EBENBECK, Martina, 57271 Hilchenbach (DE); NIEHUES, Heinz, 57271 Hilchenbach (DE)
(74) Vertreter: Klüppel, Walter
(86) Internationale Anmeldenummer: PCT/EP2007/007659
(87) Internationale Veröffentlichungsnummer: WO 2008/046470

(56) Entgegenhaltungen:
- EP-A- 1 464 416
- WO-A-01/05530
- DE-A1- 19 732 862
- US-A1- 2002 080 851

## Beschreibung

Die Erfindung betrifft eine Vorrichtung zur Messung des Bandzuges in einem metallischen Band, insbesondere in einem Stahlband, die einen ebenen, flächigen Tisch aufweist, über den das metallische Band laufen kann und an dessen einem Ende eine Vielzahl von Messelementen angeordnet sind, die zur Messung des Bandzuges geeignet sind, wobei Kühlelemente vorgesehen sind, die unter dem Tisch angeordnet sind und mit denen Kühlflüssigkeit, insbesondere Wasser, in den Bereich der Messelemente geleitet werden kann.

Gattungsgemäße Vorrichtungen sind bekannt, um eine Messung des Planheitszustandes insbesondere eines unter Spannung stehenden Walzbandes vornehmen zu können siehe z.B. DE-A 197 32 862. Dabei kommt als Messelement zumeist eine Messrolle zum Einsatz, die gegen die Unterseite des Bandes gedrückt wird, das den Tisch in eine Förderrichtung passiert. Aufgrund der gemessenen Auslenkung der Messrolle in Richtung der Oberflächennormale des Bandes kann auf den Bandzug geschlossen werden.

Im Zusammenhang mit den gattungsgemäßen Vorrichtungen wird auch von einem Looper bzw. Tensionsmeterlooper gesprochen.

Eingangs genannte Vorrichtungen sind in der 37 21 746 C2, in der DE 197 04 447 A1, in der DE 199 18 699 A1 und in der US 4,004,459 beschrieben.

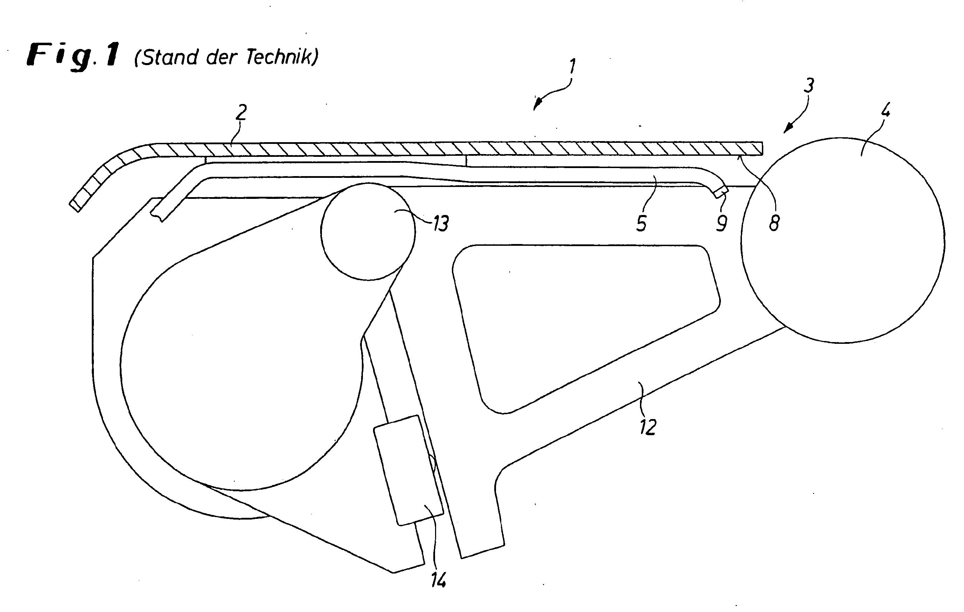

In Figur 1 ist eine vorbekannte Ausführungsform einer gattungsgemäßen Vorrichtung 1 zur Messung des Bandzuges dargestellt. Dort ist die Seitenansicht der Vorrichtung im Schnitt zu sehen. Das nicht dargestellte Metallband passiert die Vorrichtung 1 von links nach rechts, wobei das Band auf der Oberseite des Tisches 2 (Leittisch) aufliegt. An der Vorderkante (3) des Tisches befindet sich eine Anzahl von Messrollen (4), die sich jeweils über einen Rahmen (12) auf einem Messaufnehmer (14) abstützen. Aufgrund der Temperatur des zu verarbeitenden bzw. zu messenden Bandes muss die Messrolle 4 gekühlt werden. Hierzu sind Kühlelemente 5 vorgesehen, d. h. Rohrleitungen, die von einer Wasserquelle aus mit Wasser versorgt werden. Die Rohrleitungen enden in Kühlflüssigkeitsaustrittsöffnungen 9, über die das Wasser auf die Messrolle 4 gelangt.

Nachteilig ist bei der vorbekannten Ausführung einer derartigen Vorrichtung zur Messung des Bandzuges folgendes: Die Rohrleitungen 5 verlaufen unter dem Tisch 2 bis zur Messrolle 4. Der Tisch 2 stützt sich dabei an seinen beiden Seiten bzw. Kanten (in Bandlaufrichtung gesehen) auf jeweils einem Trägerelement (Tragrahmen) ab. Aus konstruktiven Gründen ist eine geringe Bauhöhe des Tisches vorgegeben, um unter dem Tisch ausreichend Platz für die Kühlwasserrohre und die weiteren Bestandteile der Konstruktion zu haben. Dadurch erhält der Tisch keine ausreichende Festigkeit und kann sich infolge mechanischer bzw. thermischer Belastung so weit durchbiegen, dass die Funktion der unter dem Tisch angeordneten Messeinrichtung zur Ermittlung der Auslenkung der Messrolle gestört wird.

Der Erfindung liegt daher die Aufgabe zugrunde, eine Vorrichtung der eingangs genannten Art so weiterzubilden, dass die genannten Nachteile vermieden werden. Die Vorrichtung zum Messen des Bandzuges soll also so weitergebildet werden, dass der Tisch in einfacher Weise gegen Durchbiegungen gesichert wird. Damit soll insbesondere die Messeinrichtung von mechanischen und thermischen Belastungen des Tisches und damit gegen dessen Verformungen unempfindlich gemacht werden können.

Diese Aufgabe wird erfindungsgemäß dadurch gelöst, dass die Kühlelemente einen biegesteifen kastenförmigen Kühlflüssigkeitsbehälter aufweisen, der beidseitig des metallischen Bandes auf jeweils mindestens einem Trägerelement angeordnet ist, wobei der Tisch mit seiner Unterseite mittelbar oder unmittelbar auf dem kastenförmigen Kühlflüssigkeitsbehälter aufliegt.

Statt für sich seitlich gelagert zu sein, ist der Tisch erfindungsgemäß direkt oder mit geeigneten Distanzelementen auf dem kastenförmigen Kühlflüssigkeitsbehälter aufgelegt, was zur Folge hat, dass ein wesentlich höherer Widerstand gegen Durchbiegungen des Tisches gegeben ist.

Um dies weiter zu verbessern, ist weiterbildungsgemäß der kastenförmige Kühlflüssigkeitsbehälter als quaderförmiger Hohlkörper ausgebildet. Dieser kann aus ebenen Blechen zusammengefügt, insbesondere zusammengelötet oder zusammengeschweißt, sein. Er kann aber auch aus mindestens einem ebenen Blech durch Abkanten des Blechs hergestellt werden, wobei gegebenenfalls mehrere abgekantete Bleche zusammengefügt (verschweißt, verlötet) werden.

Mit Vorteil weist der kastenförmige Kühlflüssigkeitsbehälter entlang seiner Unterseite eine Anzahl Kühlflüssigkeitsaustrittsöffnungen auf. Entlang seiner beiden Querseiten hat er bevorzugt je eine Kühlflüssigkeitszutrittsleitung.

Die beiden Kühlflüssigkeitszutrittsleitungen können an den Querseiten des Kühlflüssigkeitsbehälters zum seitlichen Anordnen des Kühlflüssigkeitsbehälters auf dem mindestens einen Trägerelement ausgebildet sein.

Das Messelement ist vorzugsweise in an sich bekannter Weise eine Messrolle. Die Vorrichtung ist besonders bevorzugt Bestandteil eines Loopers in einem Fertiggerüst einer Walzanlage. Der Erfindungsvorschlag kommt bevorzugt in Loopem (Schlingenheber) in Fertiggerüsten in Warmbreitbandstraßen und in CSP-Anlagen (Compact Strip Production - Anlagen) zum Einsatz.

Die erfindungsgemäße Ausgestaltung ermöglicht, dass es zu keinen Verformun-gen des Tisches und damit zu einem besseren Schutz der Messelemente von äußeren Einflüssen der Segmentrahmen und des Tisches kommt. Der vorgeschlagene kastenförmige Kühlflüssigkeitsbehälter wirkt bei der Verformung als Barriere, so dass Verformungen des Tisches verhindert werden können. Vertikalkräfte auf den Tisch werden also durch den kastenförmigen Kühlflüssigkeitsbehälter (Wasserkasten) verbessert aufgenommen und führen nicht zu einer Beaufschlagung der Messelemente.

Der kastenförmige Kühlflüssigkeitsbehälter übernimmt daher die Aufgabe der Zuführung des Kühlwassers zu den Messrollen des Tensiometers bzw. des Schlingenhebers desselben und weiterhin der Abstützung des Tisches. Die spezifisch vorgeschlagene Ausführung des Kühlflüssigkeitsbehälters schafft eine hohe Festigkeit desselben und damit einen hohen Widerstand gegen Durchbiegungskräfte.

In der Zeichnung ist ein Ausführungsbeispiel der Erfindung dargestellt. Es zeigen:
- Fig. 1: die Seitenansicht einer Vorrichtung zur Messung des Bandzuges im Schnitt, und zwar gemäß dem Stand der Technik;

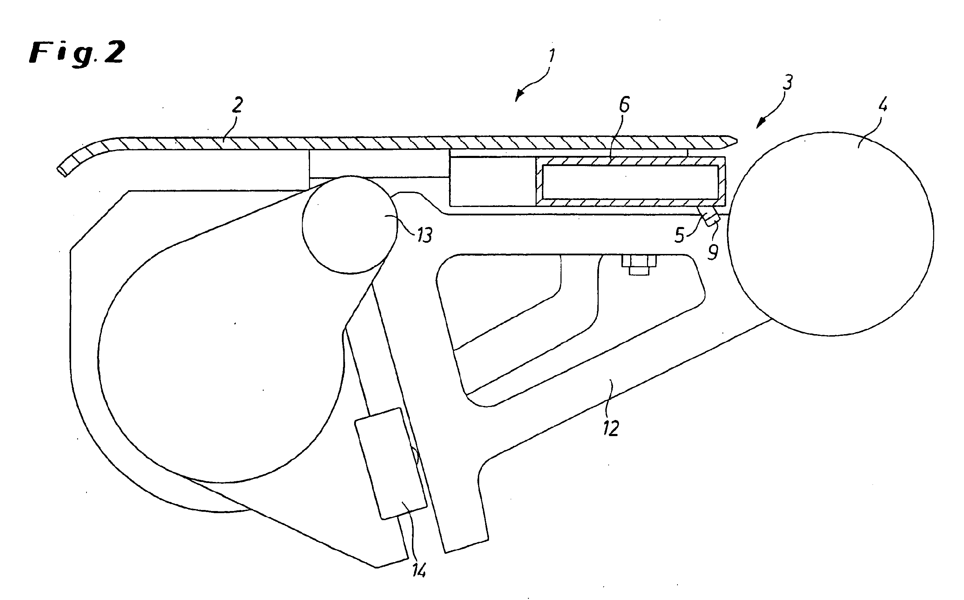

- Fig. 2: die Seitenansicht der Vorrichtung zur Messung des Bandzuges ge- mäß der Erfindung; und
- Fig. 3: in perspektivischer Ansicht den kastenförmigen Kühlflüssigkeitsbe- hälter der Vorrichtung zur Messung des Bandzuges gemäß der Er- findung, von unten aus betrachtet.

In den Figuren ist eine Vorrichtung 1 zur Messung des Bandzuges eines Stahlbandes zu sehen, wobei das Band selber nicht dargestellt ist. Das Band passiert in seine Förderrichtung einen Tisch 2, der eine ebene Oberfläche bildet, auf der das Band aufliegt. An der Vorderkante 3 des Tisches sind Messelemente in Form von Messrollen 4 angeordnet. Die Messrollen sind jeweils am einen Ende eines Arms 12 angeordnet, wobei der Arm 12 in einer Lagerstelle 13 gelagert ist. Ein Ende des Arms 12 drückt auf eine Messzelle 14, so dass ermittelt werden kann, wie weit die Messrolle 4 infolge der Spannung im Band nach unten gedrückt wird. Damit besteht die Möglichkeit, über das Messelement 4, 12, 14 den Bandzug zu messen.

Da das passierende Band heiß ist, muss dafür Sorge getragen werden, dass es zu einer hinreichenden Kühlung der Messrolle 4 kommt. Hierfür sind Kühlelemente 5 vorgesehen, die sich von einer nicht dargestellten Quelle für Kühlwasser bis zu Kühlflüssigkeitsaustrittsöffnungen erstrecken.

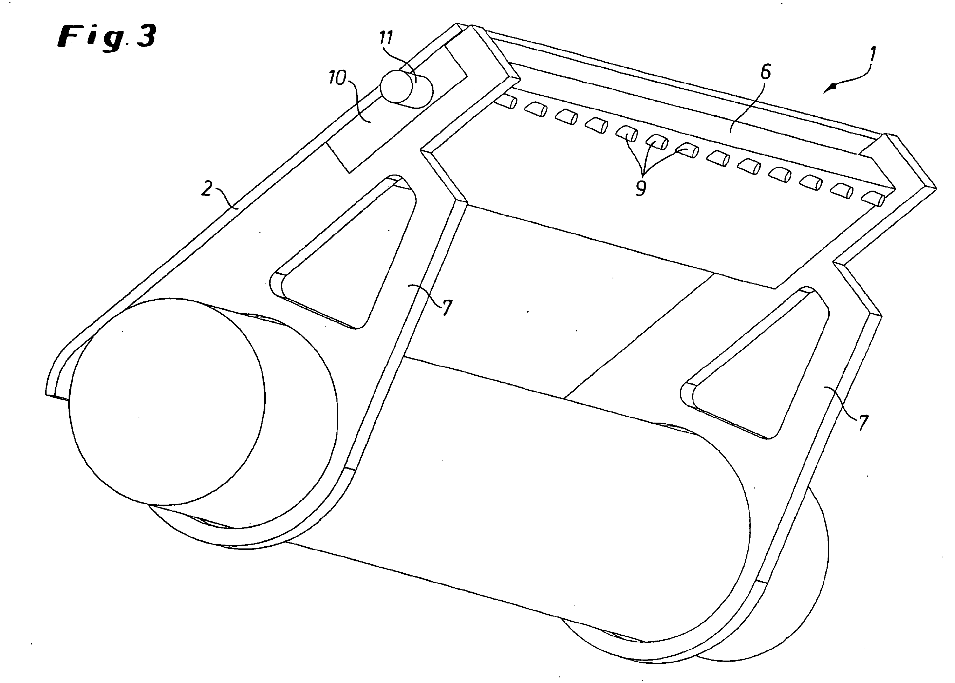

Die Kühlelemente 5 werden hier im Wesentlichen durch einen kastenförmigen Kühlflüssigkeitsbehälter 6 gebildet, der unterhalb des Tisches 2 angeordnet ist und auf dem der Tisch 2 aufliegt (s. Fig. 3).

Der Kühlflüssigkeitsbehälter 6 (am besten zu sehen in Fig. 3) hat eine quaderförmige Kontur und an seiner Unterseite 8 eine Anzahl Kühlflüssigkeitsaustrittsöffnungen 9, über die Kühlwasser zu der Messrolle 4 geleitet wird. Mit Kühlwasser gespeist wird der Kühlflüssigkeitsbehälter 6 von zwei an den Querseiten 10 angeordneten Kühlflüssigkeitszutrittsleitungen 11.

Wie es am besten wiederum in Fig. 3 gesehen werden kann, liegt der kastenförmige Kühlflüssigkeitsbehälter 6 seitlich auf Trägerelementen 7 auf, die durch die Umgebungsbauteile der Vorrichtung 1 gebildet werden. Durch die quaderförmige Ausgestaltung des Kühlflüssigkeitsbehälters 6 hat dieser ein hohes Widerstandmoment gegen Biegung. Das bewirkt, dass der auf dem Kühlflüssigkeitsbehälter 6 aufliegende Tisch 2 optimal unterstützt wird und es bei mechanischen oder thermischen Belastungen des Tisches, verbunden mit entsprechenden Durchbiegungen, nicht dazu kommt, dass sich die Durchbiegungen bis zu der Messzelle 14 durchschlagen können. Vielmehr wird der Tisch 2 fest auf dem Kühlflüssigkeitsbehälter 6 abgestützt, so dass auch bei hohen Belastungen keine relevanten Einflüsse zu befürchten sind, die die Messergebnisse bei der Messung des Bandzuges beeinträchtigen können.

### Bezugszeichenliste:

- 1: Vorrichtung zur Messung des Bandzuges
- 2: Tisch
- 3: Vorderkante des Tisches
- 4: Messrolle
- 5: Kühlelement
- 6: kastenförmiger Kühlflüssigkeitsbehälter
- 7: Trägerelement
- 8: Unterseite des Tisches
- 9: Kühlflüssigkeitsaustrittsöffnung
- 10: Querseite
- 11: Kühlflüssigkeitszutrittsleitung
- 12: Arm
- 13: Lagerstelle
- 14: Messzelle

## Patentansprüche

1. Vorrichtung (1) zur Messung des Bandzuges in einem metallischen Band, insbesondere in einem Stahlband, die einen ebenen, flächigen Tisch (2) aufweist, über den das metallische Band laufen kann und an dessen einem Ende (3) eine Vielzahl von Messelementen (4) angeordnet sind, die zur Messung des Bandzuges geeignet sind, wobei Kühlelemente (5) vorgesehen sind, die unter dem Tisch (2) angeordnet sind und mit denen Kühlflüssigkeit, insbesondere Wasser, in den Bereich des Messelements (4) geleitet werden kann,
**dadurch gekennzeichnet,**
**dass** die Kühlelemente (5) einen biegesteifen kastenförmigen Kühlflüssigkeitsbehälter (6) aufweisen, der beidseitig des metallischen Bandes auf jeweils mindestens einem Trägerelement (7) angeordnet ist, wobei der Tisch (2) mit seiner Unterseite mittelbar oder unmittelbar auf dem kastenförmigen Kühlflüssigkeitsbehälter (6) aufliegt.

2. Vorrichtung nach Anspruch 1,
**dadurch gekennzeichnet,**
**dass** der kastenförmige Kühlflüssigkeitsbehälter (6) als quaderförmiger Hohlkörper ausgebildet ist.

3. Vorrichtung nach Anspruch 1 oder 2,
**dadurch gekennzeichnet,**
**dass** der kastenförmige Kühlflüssigkeitsbehälter (6) aus ebenen Blechen zusammengefügt ist.

4. Vorrichtung nach Anspruch 1 oder 2,
**dadurch gekennzeichnet,**
**dass** der kastenförmige Kühlflüssigkeitsbehälter (6) aus mindestens einem ebenen Blech durch Abkanten des Blechs hergestellt ist.

5. Vorrichtung nach einem der Ansprüche 1 bis 4,
**dadurch gekennzeichnet,**
**dass** der kastenförmige Kühlflüssigkeitsbehälter (6) entlang seiner Unterseite (8) eine Anzahl Kühlflüssigkeitsaustrittsöffnungen (9) aufweist.

6. Vorrichtung nach einem der Ansprüche 1 bis 5,
**dadurch gekennzeichnet,**
**dass** der kastenförmige Kühlflüssigkeitsbehälter (6) entlang seiner beiden Querseiten (10) je eine Kühlflüssigkeitszutrittsleitung (11) aufweist.

7. Vorrichtung nach einem der Ansprüche 1 bis 6,
**dadurch gekennzeichnet,**
**dass** das Messelement (4) eine Messrolle ist.

8. Vorrichtung nach einem der Ansprüche 1 bis 7,
**dadurch gekennzeichnet,**
**dass** sie Bestandteil eines Loopers in einem Fertiggerüst einer Walzanlage ist.

9. Vorrichtung nach Anspruch 8,
**dadurch gekennzeichnet,**
**dass** die Walzanlage eine Warmbreitbandstraße oder eine CSP-Walzanlage (Compact Strip Production - Anlage) ist.

## Claims

1. Device (1) for measuring strip tension in a metallic strip, particularly in a steel strip, which comprises a flat, areal table (2) over which the metallic strip can run and at one end (3) of which is arranged a plurality of measuring elements (4) suitable for measuring the strip tension, wherein cooling elements (5) which are arranged under the table (2) and by which cooling liquid, particularly water, can be conducted into the region of the measuring element (4) are provided, **characterised in that** the cooling elements (5) comprise a box-shaped liquid container (6) which is stiff in bending and which is arranged on each side of the metallic strip on at least one respective support element (7), wherein the table (2) rests by its lower side indirectly or directly on the box-shaped cooling liquid container (6).

2. Device according to claim 1, **characterised in that** the box-shaped cooling liquid container (6) is constructed as a block-shaped hollow body.

3. Device according to claim 1 or 2, **characterised in that** the box-shaped cooling liquid container (6) is assembled from flat sheet metal plates.

4. Device according to claim 1 or 2, **characterised in that** the box-shaped cooling liquid container (6) is produced from at least one flat sheet metal plate by folding over the sheet metal plate.

5. Device according to any one of claims 1 to 4, **characterised in that** the box-shaped cooling liquid container (6) has a number of cooling liquid outlet openings (9) along its lower side (8).

6. Device according to any one of claims 1 to 5, **characterised in that** the box-shaped cooling liquid container (6) has a respective cooling liquid feed duct (11) along each of its two transverse sides (10).

7. Device according to any one of claims 1 to 6, **characterised in that** the measuring element (4) is a measuring roller.

8. Device according to any one of claims 1 to 7, **characterised in that** it is a component of a looper in a finishing stand of a rolling mill.

9. Device according to claim 8, **characterised in that** the rolling mill is a hot wide-strip rolling train or a CSP rolling mill (compact strip production plant).

## Revendications

1. Dispositif (1) pour la mesure de la traction dans un feuillard métallique, en particulier dans un feuillard d'acier, qui comporte une table plane (2) d'une certaine surface, sur laquelle le feuillard métallique peut circuler et avec une pluralité d'éléments de mesure (4) agencés à l'une de ses extrémités (3), qui conviennent pour la mesure de la traction dans le feuillard, dans lequel il est prévu des éléments de refroidissement (5), qui sont agencés au-dessous de la table (2) et au moyen desquels un liquide de refroidissement, en particulier de l'eau, peut être amené jusque dans la région de l'élément de mesure (4),
**caractérisé en ce que**
les éléments de refroidissement (5) comprennent un réservoir à liquide de refroidissement (6) en forme de caisson rigide vis-à-vis de la flexion, agencé des deux côtés du feuillard métallique sur au moins un élément porteur respectif (7), dans lequel la table (2) repose directement ou indirectement avec sa face inférieure sur le réservoir à liquide refroidissement (6) en forme de caisson.

2. Dispositif selon la revendication 1,
**caractérisé en ce que** le réservoir à liquide de refroidissement (6) en forme de caisson est réalisé comme un corps creux parallélépipédique.

3. Dispositif selon la revendication 1 ou 2,
**caractérisé en ce que** le réservoir à liquide de refroidissement (6) en forme de caisson est assemblé à partir de tôles planes.

4. Dispositif selon la revendication 1 ou 2,
**caractérisé en ce que** le réservoir à liquide de refroidissement (6) en forme de caisson est fabriqué à partir d'au moins une tôle plane par pliage de la tôle.

5. Dispositif selon l'une des revendications 1 à 4,
**caractérisé en ce que** le réservoir à liquide de refroidissement (6) en forme de caisson comporte le long de sa face inférieure (8) un certain nombre d'ouvertures de sortie (9) pour liquide de refroidissement.

6. Dispositif selon l'une des revendications 1 à 5,
**caractérisé en ce que** le réservoir à liquide de refroidissement (6) en forme de caisson comprend une conduite d'amenée de liquide de refroidissement (11) respective le long de ses deux côtés transversaux (10).

7. Dispositif selon l'une des revendications 1 à 6,
**caractérisé en ce que** l'élément de mesure (4) est un rouleau de mesure.

8. Dispositif selon l'une des revendications 1 à 7,
**caractérisé en ce qu'**il fait partie d'un boucleur ("looper") dans une cage de finition d'une installation de laminage.

9. Dispositif selon la revendication 8,
**caractérisé en ce que** l'installation de laminage est un train de laminage à chaud pour bande large ou une installation de laminage de type "CSP" (Compact Strict Production - production compacte de feuillard).
